# EUROPEAN PATENT APPLICATION

(11) **EP 4 080 602 A2**
(43) Date of publication of application: **26.10.2022**
(21) Application number: 22169105.8
(22) Date of filing: 20.04.2022
(51) Int. Cl.: H01M 4/13, H01M 4/139, H01M 4/48, H01M 4/62, H01M 4/04

(54) **SILICON-BASED NEGATIVE ELECTRODE AND METHOD OF MANUFACTURING THE SAME**

(30) Priority: 20.04.2021 KR 20210051122
(71) Applicant: SK On Co., Ltd., Seoul 03188 (KR)
(72) Inventor: LEE, Joon Yeob, 34124 Daejeon (KR); KO, Byoung Ho, 34124 Daejeon (KR); KIM, Jeong A, 34124 Daejeon (KR); JIN, Jae Kyu, 34124 Daejeon (KR)
(74) Representative: Stolmár & Partner Patentanwälte PartG mbB

(57) **Abstract**

A negative electrode for a secondary battery includes: a negative electrode current collector; and a negative electrode active material layer formed on the negative electrode current collector, wherein the negative electrode active material layer includes a silicon-based active material and a conductive material, the conductive material includes carbon nanotubes having a diameter of 4 to 9 nm and 3 to 7 walls, and the carbon nanotubes are included in an amount of 3 wt% to 9 wt% with respect to a total of 100 wt% of the silicon-based active material. The negative electrode according to the present disclosure shows a negative electrode slurry resistance value of or below a predetermined value to secure excellent conductivity, and according to a manufacturing method of the present disclosure, an effect of significantly reducing costs as compared with the conventional case is shown.

## Description

### CROSS-REFERENCE TO RELATED APPLICATION(S)

This application claims benefit of priority to Korean Patent Application No. 10-2021-0051122 filed on April 20, 2021 in the Korean Intellectual Property Office, the disclosure of which is incorporated herein by reference in its entirety.

### BACKGROUND

### 1. FIELD

The present disclosure relates to a silicon-based negative electrode and a method of manufacturing the same.

### 2. DESCRIPTION OF RELATED ART

Recently, as technological development of and demand for mobile devices have increased, demand for batteries as an energy source has rapidly increased, and thus, various studies for a battery which may meet various needs are being conducted. In particular, as a power of the device, a lithium secondary battery having high energy density and excellent lifespan and cycle characteristics is being actively studied.

A lithium secondary battery refers to a battery including a positive electrode comprising a positive electrode active material for insertion/desorption of a lithium ion, a negative electrode including a negative electrode active material for insertion/desorption of a lithium ion, and a non-aqueous electrolyte containing a lithium ion in an electrode assembly with a microporous separator interposed between the positive electrode and the negative electrode.

As the negative electrode active material, a lithium metal, a lithium alloy, crystalline or non-crystalline carbon, a carbon composite, a silicon-based active material, and the like are being used. Thereamong, the silicon-based active material may improve capacitance of a secondary battery to provide high energy density, and thus, is used alone or in combination with other negative electrode active materials.

Meanwhile, when the silicon-based active material is used, in order to improve conductivity, a technology of using a single-walled carbon nanotube and a multi-walled carbon nanotube as a conductive material was suggested. However, the single-walled carbon nanotube is difficult to synthesize and is unfavorable in terms of cost, and the multi-walled carbon nanotube is inexpensive, but the amount required for securing conductivity is excessively large, and may be rather unfavorable in terms of performance of the entire battery.

Accordingly, there is needed development of a negative electrode including a silicon-based active material which secures an appropriate level of conductivity and is improved in terms of costs by reducing a cost price and a secondary battery including the same.

### SUMMARY

An aspect of the present disclosure may provide a silicon-based negative electrode which may exhibit a negative electrode slurry resistance value equal to or less than a predetermined value to secure an appropriate level of conductivity, and a method of manufacturing the same.

According to an aspect of the present disclosure, a negative electrode for a secondary battery may include: a negative electrode current collector; and a negative electrode active material layer formed on the negative electrode current collector, wherein the negative electrode active material layer includes a silicon-based active material and a conductive material, the conductive material includes carbon nanotubes having a diameter of 4 to 9 nm and 3 to 7 walls, and the carbon nanotubes are included in an amount of 3 wt% to 9 wt% with respect to a total of 100 wt% of the silicon-based active material.

The carbon nanotubes may be included in an amount of 5 wt% to 9 wt% with respect to a total weight of the silicon-based active material.

The conductive material may further include one or more selected from single-walled carbon nanotubes, multi-walled carbon nanotubes having 8 or more walls, and carbon black.

The conductive material may further include the single-walled carbon nanotubes, and the single-walled carbon nanotubes may be included in an amount of 0.15 wt% or more and 1 wt% or less with respect to the total weight of the silicon-based active material.

A weight ratio between the carbon nanotubes having a diameter of 4 to 9 nm and 3 to 7 walls and the single-walled carbon nanotubes may be 1:0.05 to 0.25.

The conductive material may further include carbon black, and the carbon black may be included in an amount of 6 wt% or more and 15 wt% or less with respect to the total weight of the silicon-based active material.

A weight ratio between the carbon nanotubes having a diameter of 4 to 9 nm and 3 to 7 walls and carbon black may be 1:2 to 4.

The negative electrode active material layer may further include a binder.

According to another aspect of the present disclosure, a method of manufacturing a negative electrode for a secondary battery may include: preparing a negative electrode slurry including a silicon-based active material, a conductive material, and a binder; and applying the negative electrode slurry to a negative electrode current collector and drying the slurry, wherein the conductive material includes carbon nanotubes having a diameter of 4 to 9 nm and 3 to 7 walls, and the carbon nanotubes are included in an amount of 3 wt% to 9 wt% with respect to a total of 100 wt% of the silicon-based active material.

A slurry resistance of the negative electrode slurry may be lower than a powder resistance of the silicon-based active material.

The slurry resistance of the negative electrode slurry may be 0.70 Ω·cm or less.

### DETAILED DESCRIPTION

Hereinafter, exemplary embodiments in the present disclosure will be described in detail with reference to various examples. However, the exemplary embodiments in the present disclosure may be modified in many different forms and the scope of the disclosure should not be limited to the embodiments set forth herein.

The present disclosure relates to a silicon-based negative electrode and a method of manufacturing the same, as an exemplary embodiment.

According to an aspect of the present disclosure, a negative electrode for a secondary battery including: a negative electrode current collector; and a negative electrode active material layer formed on the negative electrode current collector, wherein the negative electrode active material layer includes a silicon-based active material and a conductive material, the conductive material includes carbon nanotubes having a diameter of 4 to 9 nm and 3 to 7 walls, and the carbon nanotubes are included in an amount of 3 wt% to 9 wt% with respect to a total of 100 wt% of the silicon-based active material, is provided.

The negative electrode current collector is not particularly limited as long as it has high conductivity without causing a chemical change in a battery. Specifically, as the negative electrode current collector, copper, stainless steel, nickel, titanium, sintered carbon, copper or stainless steel which is surface-treated with carbon, nickel, titanium, silver, and the like, an aluminum-cadmium alloy, and the like may be used.

The negative electrode current collector may have a thickness of 3 to 100 µm, and specifically, a thickness of 4 µm to 40 µm for implementing a negative electrode having a low thickness, and fine irregularities may be formed on the surface of the negative electrode current collector to strengthen a binding force of a negative electrode active material. For example, the negative electrode current collector may be used in various forms such as a film, a sheet, a foil, a net, a porous body, a foam, and a nonwoven fabric body.

A negative electrode active material layer formed on at least one surface of the negative electrode current collector may include a silicon-based active material. The silicon-based active material may include a compound represented by SiOₓ (0≤x<2), and since SiO₂ does not react with a lithium ion and may not store lithium, x may be within the range.

Without being limited thereto, an average particle diameter (D₅₀) of the silicon-based active material may be 1 µm to 10 µm, specifically 2 µm to 6 µm, in terms of promoting structural stability of an active material during charging and discharging, and forming a conductive network for maintaining electrical conductivity better, or facilitating access to a binder for binding the active material and the current collector.

Meanwhile, the silicon-based active material may be included in an amount of various contents, and for example, may be included in an amount of 5 wt% to 90 wt% in the negative electrode active material layer. Specifically, in terms of sufficiently implementing a high capacitance of the silicon-based active material into a secondary battery, the silicon-based active material may be included in an amount of 60 wt% to 90 wt%, and more specifically 65 wt% to 75 wt% in the negative electrode active material layer.

The negative electrode active material layer of the negative electrode according to the present disclosure may include a conductive material for assisting and improving conductivity of a secondary battery, and the conductive material may include thin-walled carbon nanotubes having a diameter of 4 to 9 nm and having 3 to 7 walls. In addition, the thin-walled carbon nanotubes may have a BET specific surface area of 500 to 700 m²/g. When the thin-walled carbon nanotubes satisfying the physical properties are used, costs may be reduced as compared with a case of using single-walled carbon nanotubes, and the amount of the thin-walled carbon nanotubes used is smaller than the amount of multi-walled carbon nanotubes used, and thus, a beneficial effect on performance improvement of the entire battery may be provided.

When the thin-walled carbon nanotubes having the physical properties described above are included as the conductive material, the thin-walled carbon nanotubes may be included in an amount of 3 wt% to 9 wt%, specifically 5 wt% to 9 wt%, with respect to a total of 100 wt% of the silicon-based active material. When the thin-walled carbon nanotubes are included in an amount of less than 3 wt% with respect to a total of 100 wt% of the silicon-based active material which is out of the above range, appropriate dispersion is not performed, so that the capacitance retention rate of a secondary battery may be deteriorated.

According to another exemplary embodiment in the present disclosure, the conductive material may further include one or more selected from single-walled carbon nanotubes, multi-walled carbon nanotubes having 8 or more walls and carbon blacks.

When the single-walled carbon nanotubes are further included as the conductive material, the single-walled carbon nanotubes may be included in an amount of 0.15 wt% or more and 1 wt% or less with respect to a total of 100 wt% of the silicon-based active material. A decrease in slurry resistance and improvement of a capacitance retention rate may be promoted also by adding 1 wt% or less of the single-walled carbon nanotubes. Therefore, the amount of the single-walled carbon nanotubes used which are difficult to be synthesized and has a high unit price may be significantly reduced, and thus, costs of the whole process may be reduced.

Meanwhile, a weight ratio between the thin-walled carbon nanotubes having a diameter of 4 to 9 nm and 3 to 7 walls and the single-walled carbon nanotubes may be 1:0.05 to 0.25, and by including the thin-walled carbon nanotubes and the single-walled carbon nanotubes at the weight ratio, a decrease in slurry resistance and improvement of a capacitance retention rate may be promoted.

Meanwhile, when carbon black is further included as the conductive material, the carbon black may be included in an amount of 6 wt% or more and 15 wt% or less with respect to the total weight of the silicon-based active material. When carbon black is used as a mixture with the thin-walled carbon nanotubes, resistance of a negative electrode slurry may be improved to improve conductivity. However, when carbon black is included in an amount of less than 6 wt%, a conductivity improvement effect is insignificant, and when carbon black is included in an amount of more than 15 wt%, it is not preferred in terms of economic feasibility.

The negative electrode active material layer may include a negative electrode binder for improving binding force between the negative electrode current collector and the negative active material or between the negative electrode active materials, if required, and the negative electrode binder may include a water-based binder and a rubber-based binder.

The water-based binder may be dissolved in a water-based solvent such as water, and may include at least one selected from polyvinyl alcohol (PVA), polyacrylic acid (PAA), polyethylene glycol (PEG), polyacrylonitrile (PAN), polyacrylamide (PAM), and Carboxymethyl cellulose (CMC) .

The rubber-based binder may be defined as a binder which is not dissolved in the water-based solvent well, but is dispersed in the water-based solvent well. Specifically, the rubber-based binder may include at least one selected from styrene butadiene rubber (SBR), hydrogenated nitrile butadiene rubber (HNBR), acrylonitrile butadiene rubber, acrylic rubber, butyl rubber, and fluoro rubber, and specifically, may include at least one selected from the group consisting of styrene butadiene rubber and hydrogenated nitrile butadiene rubber, and for example, may include styrene butadiene rubber, in terms of being easy for dispersion and having excellent phase stability.

The negative electrode binder is not particularly limited, but may be included in an amount of a content of 1 wt% or more and 15 wt% or less, specifically in a content of 3 wt% or more and 10 wt% or less, for example, in a content of about 5 wt%. Within the range, the binder may bind the silicon-based active material better to significantly reduce a volume expansion problem of an active material, and also the binder may be easily dispersed in the preparation of a slurry for forming the negative electrode active material layer, and coatability and phase stability of the slurry may be improved.

Meanwhile, according to another aspect of the present disclosure, a method of manufacturing a negative electrode for a secondary battery includes: preparing a negative electrode slurry including a silicon-based active material, a conductive material, and a binder; and applying the negative electrode slurry to a negative electrode current collector and drying the slurry, wherein the conductive material includes thin-walled carbon nanotubes having a diameter of 4 to 9 nm and 3 to 7 walls, and the carbon nanotubes are included in an amount of 3 wt% to 9 wt% with respect to a total of 100 wt% of the silicon-based active material, is provided.

The negative electrode slurry further includes a solvent, and as the solvent, at least one selected from distilled water, ethanol, methanol, and isopropyl alcohol may be used, in terms of facilitating dispersion of the negative electrode active material, the negative electrode conductive material, and the negative electrode binder, and preferably, distilled water may be included.

Without being limited thereto, the solvent for forming the negative electrode slurry may be included so that a solid content concentration including the negative electrode active material, the negative electrode conductive material, and the negative electrode binder is 30 wt% to 70 wt%, specifically 40 wt% to 50 wt%, considering the viscosity, the coatability, the dispersibility, and the like of the negative electrode slurry.

Since the silicon-based active material, the conductive material, and the negative electrode current collector are as described above, detailed descriptions thereof will be omitted hereinafter.

Meanwhile, the slurry resistance of the negative electrode slurry including the silicon-based active material, the conductive material, and a residual solvent implemented according to the present disclosure may be lower than the powder resistance of the silicon-based active material. Since the silicon-based active material has a problem of low conductivity, it is preferred that the slurry resistance value of the negative electrode slurry is lower than the powder resistance value of the silicon-based active material. For example, since the powder resistance of SiOₓ is about 0.73 Ω·cm, the slurry resistance value of the negative electrode slurry may be 0.70 Ω·cm or less, for example, 0.61 Ω·cm or less.

As such, in the present disclosure, the slurry resistance value is derived without actually manufacturing the negative electrode including the silicon-based active material, and thus, electrode performance may be simply predicted by measuring the slurry resistance of the negative electrode slurry.

According to another aspect of the present disclosure, a secondary battery including the negative electrode is provided. Specifically, the secondary battery according to an exemplary embodiment in the present disclosure includes the negative electrode described above; a positive electrode which is a counter electrode to the negative electrode; a separator interposed between the negative electrode and the positive electrode; and an electrolyte.

The positive electrode is provided with a positive electrode active material layer formed by applying a slurry including a positive electrode active material, a binder, and a conductive material and drying the slurry. The positive electrode current collector is not particularly limited as long as it has high conductivity without causing a chemical change in a battery. Specifically, as the positive electrode current collector, aluminum, stainless steel, nickel, titanium, sintered carbon, copper or stainless steel which is surface-treated with carbon, nickel, titanium, silver, and the like, an aluminum-cadmium alloy, and the like may be used. In addition, the positive electrode current collector may usually have a thickness of 3 to 500 µm.

The positive electrode active material is a compound for reversible intercalation and deintercalation of lithium, and specifically, may include a lithium transition metal composite oxide including at least one metal consisting of nickel, cobalt, manganese, and aluminum and lithium, specifically, a lithium transition metal composite oxide including a transition metal including nickel, cobalt, and manganese and lithium.

The positive electrode active material may be included in an amount of 80 wt% to 99 wt%, for example, 92 wt% to 98.5 wt% in the positive electrode active material layer, considering exertion of a sufficient capacitance and the like of the positive electrode active material.

The positive electrode active material layer may further include a positive electrode binder. The positive electrode binder is a component of assisting binding of the active material and the conductive material and the like, and binding of the positive electrode active to the current collector. The positive electrode binder may be, specifically, at least one selected from the group consisting of polyvinylidene fluoride, polyvinyl alcohol, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene terpolymer (EPDM), sulfonated EPDM, styrene-butadiene rubber, and fluoro rubber, and specifically, may include polyvinylidene fluoride.

In addition, the positive electrode active material layer may further include one or more conductive materials selected from the group consisting of graphite, carbon black, and conductive oxides.

The separator separates the negative electrode and the positive electrode and provides a migration channel of lithium ions, and may be used without particular limitation as long as it is usually used as a separator in a lithium secondary battery. In particular, a separator having a low resistance to ion migration of an electrolyte and excellent electrolyte solution impregnation ability may be used.

Specifically, a porous polymer film, for example, a porous polymer film made of a polyolefin-based polymer such as an ethylene homopolymer, a propylene homopolymer, an ethylene/butene copolymer, an ethylene/hexene copolymer, and an ethylene/methacrylate copolymer, or a two or more layered laminated structure thereof, may be used. In addition, a common porous nonwoven fabric, for example, a glass fiber having a high melting point, a nonwoven fabric made of a polyethylene terephthalate fiber, and the like may be used. In addition, a coated separator containing a ceramic component or a polymer material for securing thermal resistance or mechanical strength may be used, selectively as a monolayer or multilayer structure .

The electrolyte may include organic-based liquid electrolytes, inorganic-based liquid electrolyte, solid polymer electrolytes, gel type polymer electrolytes, solid inorganic electrolytes, molten type inorganic electrolytes, and the like, but is not limited thereto.

The secondary battery including the negative electrode according to the present disclosure is useful in portable devices such as a mobile phone, a notebook computer, and a digital camera, electric vehicle fields such as a hybrid electric vehicle (HEV), and the like, and specifically, may be used as a configuration cell of a mid-large battery module. Accordingly, an exemplary embodiment in the present disclosure also provides a mid-large battery module including the secondary battery as described above as a unit cell.

The mid-large battery module as such may be applied to a power source requiring a large output and a large capacitance, such as an electric vehicle, a hybrid electric vehicle, and an electric power storage apparatus.

Hereinafter, the present disclosure will be described in detail by way of examples. The following examples are for describing the present disclosure in more detail, but the present disclosure is not limited thereto.

### Example

### 1. Preparation of slurry and measurement of slurry resistance

### Preparation Example 1

6 wt% of a silicon-based oxide (SiOₓ) having a powder resistance of 0.73 Ω·cm as a negative electrode active material and 0.3 wt% of thin-walled carbon nanotubes (TWCNT) having 5 walls and a diameter of 5 nm as a conductive material were added to water which was a solvent, and 1.3 wt% of carboxymethyl cellulose (CMC) was added thereto to prepare a negative electrode slurry.

### Preparation Example 2

A negative electrode slurry was prepared in the same manner as in Preparation Example 1, except that TWCNT was added in a content of 0.20 wt%.

### Preparation Example 3

A negative electrode slurry was prepared in the same manner as in Preparation Example 1, except that TWCNT was added in a content of 0.25 wt%.

### Preparation Example 4

A negative electrode slurry was prepared in the same manner as in Preparation Example 1, except that TWCNT was added in a content of 0.50 wt%.

### Comparative Preparation Example 1

A negative electrode slurry was prepared in the same manner as in Preparation Example 1, except that TWCNT was not added.

A PET film was coated with each slurry prepared in Preparation Examples 1 to 4 and Comparative Preparation Example 1 and dried at a temperature of 100°C for 30 minutes, a slurry resistance was measured by a 4-probe method, and each slurry resistance value measured is shown in Table 1.

**[Table 1]**

| | TWCNT content (wt%) | Slurry resistance (Ω·cm) |
|---|---|---|
| Preparation Example 1 | 0.3 | 0.23 |
| Preparation Example 2 | 0.20 | 0.61 |
| Preparation Example 3 | 0.25 | 0.21 |
| Preparation Example 4 | 0.50 | 0.07 |
| Comparative Preparation Example 1 | 0 (no conductive material) | Immeasurable |

Referring to Table 1, it is confirmed that Preparation Examples 1 to 4 to which TWCNT was added showed a slurry resistance value lower than 0.73 Ω·cm which was the powder resistance of the silicon-based oxide (SiOₓ) as the negative electrode active material. Meanwhile, Comparative Preparation Example 1 which did not include TWCNT showed a slurry resistance value which was too high to measure.

### Preparation Example 5

A negative electrode slurry was prepared in the same manner as in Preparation Example 2, except that 0.01 wt% of SWCNT was added as a conductive material.

### Preparation Example 6

A negative electrode slurry was prepared in the same manner as in Preparation Example 2, except that 0.02 wt% of SWCNT was added as a conductive material.

### Preparation Example 7

A negative electrode slurry was prepared in the same manner as in Preparation Example 2, except that 0.03 wt% of SWCNT was added as a conductive material.

### Preparation Example 8

A negative electrode slurry was prepared in the same manner as in Preparation Example 2, except that 0.035 wt% of SWCNT was added as a conductive material.

### Preparation Example 9

A negative electrode slurry was prepared in the same manner as in Preparation Example 2, except that 0.04 wt% of SWCNT was added as a conductive material.

### Preparation Example 10

A negative electrode slurry was prepared in the same manner as in Preparation Example 2, except that 0.05 wt% of SWCNT was added as a conductive material.

A PET film was coated with each slurry prepared in Preparation Examples 5 to 10 and dried at a temperature of 100°C for 30 minutes, a slurry resistance was measured by a 4-probe method, and each slurry resistance value measured is shown in Table 2.

**[Table 2]**

| | Additional SWCNT content (wt%) | Slurry resistance (Ω·cm) |
|---|---|---|
| Preparation Example 5 | 0.01 | 0.32 |
| Preparation Example 6 | 0.02 | 0.18 |
| Preparation Example 7 | 0.03 | 0.11 |
| Preparation Example 8 | 0.035 | 0.12 |
| Preparation Example 9 | 0.04 | 0.09 |
| Preparation Example 10 | 0.05 | 0.08 |

### Preparation Example 11

A negative electrode slurry was prepared in the same manner as in Preparation Example 2, except that 0.4 wt% of carbon black was added as a conductive material.

### Preparation Example 12

A negative electrode slurry was prepared in the same manner as in Preparation Example 2, except that 0.6 wt% of carbon black was added as a conductive material.

### Preparation Example 13

A negative electrode slurry was prepared in the same manner as in Preparation Example 2, except that 0.8 wt% of carbon black was added as a conductive material.

### Preparation Example 14

A negative electrode slurry was prepared in the same manner as in Preparation Example 2, except that 0.2 wt% of carbon black was added as a conductive material.

A PET film was coated with each slurry prepared in Preparation Examples 11 to 14 and dried at a temperature of 100°C for 30 minutes, a slurry resistance was measured by a 4-probe method, and each slurry resistance value measured is shown in Table 3.

**[Table 3]**

| | Additional carbon black content (wt%) | Slurry resistance (Ω·cm) |
|---|---|---|
| Preparation Example 11 | 0.4 | 0.46 |
| Preparation Example 12 | 0.6 | 0.31 |
| Preparation Example 13 | 0.8 | 0.35 |
| Preparation Example 14 | 0.2 | 0.6 |

Referring to Tables 2 and 3, when SWCNT and carbon black were further added as a conductive material, a slurry resistance value lower than 0.61 Ω·cm which was the slurry resistance value of Preparation Example 2 was shown, and thus, it is confirmed that the slurry resistance value may be further decreased by adding a conductive material.

### 2. Manufacture of coin cell and measurement of capacitance retention rate

### Example 1

A copper foil current collector having a thickness of 10 µm was coated with negative electrode slurry prepared in Preparation Example 1 to manufacture a negative electrode plate. The negative electrode plate with finished coating was dried at 100°C for 1 hour and rolled to manufacture a negative electrode plate having a density of 1.5 g/cc.

The thus-manufactured negative electrode plate was heat-treated for 1 hour or more in a vacuum atmosphere at 100°C, and cut into a circle having a diameter of 16 mm to manufacture a negative electrode to be applied to a coin cell.

### Example 2

A negative electrode was manufactured in the same manner as in Example 1, except that the slurry prepared in Preparation Example 2 was used.

### Example 3

A negative electrode was manufactured in the same manner as in Example 1, except that the slurry prepared in Preparation Example 3 was used.

### Example 4

A negative electrode was manufactured in the same manner as in Example 1, except that the slurry prepared in Preparation Example 4 was used.

### Example 5

A negative electrode was manufactured in the same manner as in Example 1, except that the slurry prepared in Preparation Example 5 was used.

### Example 6

A negative electrode was manufactured in the same manner as in Example 1, except that the slurry prepared in Preparation Example 8 was used.

### Example 7

A negative electrode was manufactured in the same manner as in Example 1, except that the slurry prepared in Preparation Example 9 was used.

### Example 8

A negative electrode was manufactured in the same manner as in Example 1, except that the slurry prepared in Preparation Example 10 was used.

### Comparative Example 1

A negative electrode was manufactured in the same manner as in Example 1, except that the slurry prepared in Comparative Preparation Example 2 was used.

### Comparative Example 2

A negative electrode slurry was prepared in the same manner as in Preparation Example 1, except that 3.0 wt% of graphite was added instead of TWCNT as a conductive material, and then the negative electrode slurry was used to manufacture a coin cell in the same manner as in Example 1.

The same positive electrode was laminated with each negative electrode manufactured in Examples 1 to 8 and Comparative Examples 1 and 2 and a separator having a thickness of 25 µm (SKIE technology, 525HV) as a boundary, and an electrolyte solution was injected and compression was performed, thereby manufacturing a coin cell of a 2032 specification.

A capacitance retention rate (%) of the coin cells of Examples 1 to 8 and Comparative Examples 1 and 2 at 100 cycles was evaluated at 45°C with a charge C-rate of 0.3 C and a discharge C-rate of 0.5 C, and the results are shown in Table 4.

**[Table 4]**

| | Capacitance retention rate (0.3 C-0.5 C)(%) @100 times |
|---|---|
| Example 1 | 91.8 |
| Comparative Example 1 | 80.5 |
| Example 2 | 83.4 |
| Example 3 | 82.9 |
| Example 4 | 85.5 |
| Comparative Example 2 | 86.9 |
| Example 5 | 88.7 |
| Example 6 | 89.3 |
| Example 7 | 87.7 |
| Example 8 | 88.7 |

Referring to Table 4, it is confirmed that the battery manufactured in Example 1 had a significantly excellent capacitance retention rate. In addition, referring to Examples 1 and 4 to 8, it is confirmed that the negative electrode manufactured by mixing a slight amount of SWCNT with TWCNT was used, thereby improving slurry resistance and a capacitance retention rate.

The negative electrode according to an exemplary embodiment in the present disclosure shows a negative electrode slurry resistance value of or below a predetermined value, thereby securing excellent conductivity. In addition, electrode performance may be predicted by measuring the resistance of a conductive material and a thickener or a slurry formed of a simpler composition, without actually manufacturing an electrode, and thus, since there is no need to actually manufacture an electrode, process and time may be saved.

Hereinabove, the exemplary embodiments in the present disclosure were described in detail, however, the scope of a right of the present disclosure is not limited thereto, and it is apparent to a person skilled in the art that various modifications and changes are possible within the scope not departing from the technical idea of the present disclosure.

While exemplary embodiments have been shown and described above, it will be apparent to those skilled in the art that modifications and variations could be made without departing from the scope of the present disclosure as defined by the appended claims.

## Claims

1. A negative electrode for a secondary battery comprising:
a negative electrode current collector; and
a negative electrode active material layer formed on the negative electrode current collector,
wherein the negative electrode active material layer includes a silicon-based active material and a conductive material,
the conductive material includes carbon nanotubes having a diameter of 4 to 9 nm and 3 to 7 walls and
the carbon nanotubes are included in an amount of 3 wt% to 9 wt% with respect to a total of 100 wt% of the silicon-based active material.

2. The negative electrode for a secondary battery of claim 1, wherein the carbon nanotubes are included in an amount of 5 wt% to 9 wt% with respect to a total of 100 wt% of the silicon-based active material.

3. The negative electrode for a secondary battery of claim 1, wherein the conductive material further includes one or more selected from single-walled carbon nanotubes, multi-walled carbon nanotubes having 8 or more walls, and carbon black.

4. The negative electrode for a secondary battery of claim 1, wherein the conductive material further includes the single-walled carbon nanotubes, and the single-walled carbon nanotubes are included in an amount of 0.15 wt% or more and 1 wt% or less with respect to a total of 100 wt% of the silicon-based active material.

5. The negative electrode for a secondary battery of claim 4, wherein a weight ratio between the carbon nanotubes having a diameter of 4 to 9 nm and 3 to 7 walls and the single-walled carbon nanotubes is 1:0.05 to 0.25.

6. The negative electrode for a secondary battery of claim 1, wherein the conductive material further includes carbon black, and the carbon black is included in an amount of 6 wt% or more and 15 wt% or less with respect to a total of 100 wt% of the silicon-based active material.

7. The negative electrode for a secondary battery of claim 6, wherein a weight ratio between the carbon nanotubes having a diameter of 4 to 9 nm and 3 to 7 walls and the carbon black is 1:2 to 4.

8. The negative electrode for a secondary battery of claim 1, wherein the negative electrode active material layer further includes a binder.

9. A method of manufacturing a negative electrode for a secondary battery, the method comprising:
preparing a negative electrode slurry including a silicon-based active material, a conductive material, and a binder; and
applying the negative electrode slurry to a negative electrode current collector and drying the slurry,
wherein the conductive material includes carbon nanotubes having a diameter of 4 to 9 nm and 3 to 7 walls, and
the carbon nanotubes are included in an amount of 3 wt% to 9 wt% with respect to a total of 100 wt% of the silicon-based active material.

10. The method of manufacturing a negative electrode for a secondary battery of claim 9, wherein a slurry resistance of the negative electrode slurry is lower than a powder resistance of the silicon-based active material.

11. The method of manufacturing a negative electrode for a secondary battery of claim 9, wherein the slurry resistance of the negative electrode slurry is 0.70 Ω·cm or less.
